(19) Europäisches Patentamt / European Patent Office / Office européen des brevets

(11) **EP 2 843 792 B1**

(12) **EUROPEAN PATENT SPECIFICATION**

(45) Date of publication and mention
of the grant of the patent:
**27.03.2019 Bulletin 2019/13**

(21) Application number: **13782362.1**

(22) Date of filing: **20.02.2013**

(51) Int Cl.:
*H02J 7/00* (2006.01)　　　　*H02H 5/04* (2006.01)
*H02J 1/00* (2006.01)

(86) International application number:
**PCT/JP2013/054121**

(87) International publication number:
**WO 2013/161362 (31.10.2013 Gazette 2013/44)**

(54) **Protector for electricity supply circuit**

SCHUTZVORRICHTUNG FÜR STROMVERSORGUNGSSCHALTUNG

DISPOSITIF DE PROTECTION POUR CIRCUIT D'ALIMENTATION EN ÉLECTRICITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2012　JP 2012098895**

(43) Date of publication of application:
**04.03.2015　Bulletin 2015/10**

(73) Proprietor: **Yazaki Corporation
Tokyo 108-0073 (JP)**

(72) Inventors:
• **NAKAMURA, Yoshihide
Susono-shi
Shizuoka 410-1107 (JP)**
• **MARUYAMA, Akinori
Susono-shi
Shizuoka 410-1107 (JP)**
• **IKUTA, Yoshinori
Susono-shi
Shizuoka 410-1107 (JP)**
• **UETA, Keisuke
Susono-shi
Shizuoka 410-1107 (JP)**

(74) Representative: **Hoffmann Eitle
Patent- und Rechtsanwälte PartmbB
Arabellastraße 30
81925 München (DE)**

(56) References cited:
WO-A1-2011/132732　　JP-A- 2010 239 835
JP-A- 2011 229 319　　US-A1- 2012 022 708

## Description

## Technical Field

The present invention relates to a protector for an electricity supply circuit for supplying electricity to a load installed on a vehicle, which immediately disconnects the circuit when an overcurrent flows to the electricity supply circuit and temperature rises in the circuit for protecting the electricity supply circuit and the load.

## Background Art

A controller for controlling a load installed on a vehicle is equipped with a protector that immediately disconnects a circuit when an overcurrent flows to the load. As a conventional example of such a protector, there is known a protector described in PTL 1. In PTL 1, the quantities of heat generation and heat radiation of an electricity supply circuit (including a power line connecting a load with a power supply, and a power switch) are calculated on the basis of a current flowing to the load, and furthermore the temperature of the electricity supply circuit is estimated on measurement of the ambient temperature. Then, if an estimated temperature reaches a predetermined threshold value, the controller disconnects the electricity supply circuit to protect a circuit connected to the load.

If the estimated temperature of the electricity supply circuit meets a predetermined temperature condition (for example, a situation where the temperature drops to the ambient temperature), the operation of the controller is switched to a sleep mode (low power consumption mode) and thereby to reduce power consumption. For the reason that current does not flow to the electricity supply circuit connected to the load in a situation where the load is inactivated, the computing load of the controller is reduced by stopping the operation of estimating the temperature of the electricity supply circuit, reducing the power consumption as a whole.

US 2012/022708 A1 relates to a power supply controller connected between a power source and a power-supply path. The controller includes a switch circuit, a power-supply path protection circuit, and a sleep mode setting circuit. The switch circuit is configured to permit and inhibit power supply from the power source to the load. The protection circuit controls switching operation of the switch circuit according to a power-supply command signal commanding start or stop of the power supply to the load, calculates a temperature of the power-supply path regardless of whether power is supplied to the load, does not calculate the temperature of the power-supply path in a sleep mode, and inhibits power supply to the switch circuit according to the calculated temperature reaching an upper limit. The sleep mode setting circuit sets the power supply controller to the sleep mode when the temperature of the power-supply drops below a predetermined threshold temperature.

WO 2011/132732 A1 relates to a battery pack for electric power tool with a battery and a control circuit. A condition satisfaction determination unit determines whether each of at least one predetermined sleep-mode transition condition is satisfied, and determines whether an all-condition satisfaction state is present, which is a state wherein all of the at least one sleep-mode transition condition are satisfied. A continuation satisfaction determination unit determines whether the all-condition satisfaction state has continued for a predetermined period of time when the condition satisfaction determination unit determines that the all-condition satisfaction state is present. A transition unit stops part of operation of the circuit to shift the circuit to a sleep mode when the continuation satisfaction determination unit determines that the all-condition satisfaction state has continued for the predetermined period of time.

## Citation List

## Patent Literature

PTL1: JP 2010-239835 A

## Summary of Invention

In the conventional example disclosed in PTL 1, there is adopted a method for calculating the quantities of heat generation and heat radiation of the electricity supply circuit based on the current flowing to the load, and thereby to estimate the temperature of the electricity supply circuit on the ground of the calculation result. Therefore, for example, just after an ignition of the vehicle is turned off and if the temperature of the electricity supply circuit rises due to environmental heat, it will be impossible to estimate the temperature correctly. Immediately after the ignition of the vehicle was turned off, especially, high-temperature air is accumulated inside an engine room because of stopping forced air cooling around the engine of the vehicle. Impacted by this circumstance, there is a possibility that the temperature of the electricity supply circuit is raised despite that no current flows to the load. In other words, the actual temperature of the electricity supply circuit may become higher than temperature obtained by the above estimation process.

In such a case, if the operation of the controller is switched to the sleep mode since the estimated temperature drops to the ambient temperature, there is caused a situation where the controller is operated in the sleep mode despite that the temperature has not dropped to the ambient temperature actually. For this reason, when the load is subsequently activated so that current flows to the electricity supply circuit, the temperature estimation with high accuracy will be no longer available.

In order to solve the above-mentioned problem, therefore, the present invention is intended to provide a protector for an electricity supply circuit, which is capable of switching the operation of a controller that controls driving and stop of a load, to a low power-consumption mode properly.

This object is accomplished by the protector defined in claim 1. The dependent claims concern particular embodiments. According to a first aspect of the present invention, there is provided a protector for an electricity supply circuit, which is installed on a vehicle to monitor a temperature of the electricity supply circuit connected to a load and which disconnects the electricity supply circuit when the temperature of the electricity supply circuit exceeds a preset threshold temperature, and thereby to protect the electricity supply circuit, the protector including: a power switch capable to switch between connection and disconnection of the electricity supply circuit; a controller configured to output a switching command signal to the power switch in accordance with an input signal; and a current detector for detecting current flowing to the electricity supply circuit. The controller includes: a temperature estimation unit configured to estimate rising temperature of the electricity supply circuit based on a current detected by the current detector and conducting time when the electricity supply circuit is turned on, estimate lowering temperature of the electricity supply circuit based on elapsed time when the electricity supply circuit is turned off by the controller, and estimate temperature of the electricity supply circuit based on the rising temperature and the lowering temperature; a timer for counting elapsed time that passes after the load has been turned off when the load is turned off by the power switch; and a mode switching unit configured to switch the controller to a low power consumption mode where the power consumption is smaller than that in a normal operation mode when a predetermined time is counted by the timer.

Preferably, the temperature estimation unit does not estimate the temperature of the electricity supply circuit when the operation is switched to the low power consumption mode by the mode switching unit.

In the protector for the electricity supply circuit according to the first aspect of the present invention, when the load is turned off by the power switch, it is started to count the time by the timer and subsequently, when the predetermined time is counted, the operation of the controller is switched to the low power consumption mode. Therefore, even when the temperature of the power line is raised by environmental temperature, it is possible to prevent the operation from being switched to the low power consumption mode before the temperature of the power line drops to the environmental temperature and also possible to detect the estimated temperature of the power line appropriately.

**Brief Description of Drawings**

Fig. 1 is a block diagram illustrating a constitution of a load drive apparatus equipped with a protector for an electricity supply circuit according to an embodiment of the present invention.

Fig. 2 is a flow chart illustrating a processing operation of the protector for the electricity supply circuit according to the embodiment of the present invention.

Fig. 3 is a timing chart illustrating change of respective signals of the protector for the electricity supply circuit according to the embodiment of the present invention.

**Description of Embodiment**

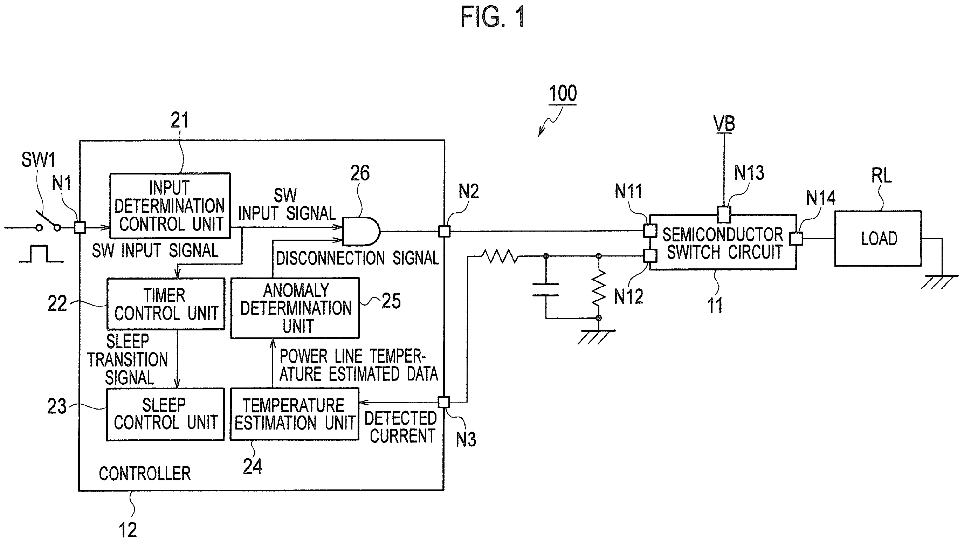

An embodiment of the present invention will be described with reference to drawings. As illustrated in Fig. 1, a load driving apparatus 100, which is equipped with a protector for an electricity supply circuit according to the embodiment of the present invention, includes a load RL, such as a motor and a lamp mounted on a vehicle, a semiconductor switch circuit 11 as a power switch that switches between driving of the load RL and its operational stop, and a controller 12 configured to control the semiconductor switch circuit 11.

The semiconductor switch circuit 11 is arranged between a power supply VB and the load RL to switch between driving and operational stop of the load in response to an operation command signal outputted from the controller 12. The semiconductor switch circuit 11 has a function as a current detector for detecting current flowing to the load RL. Specifically, when the operation command signal is inputted to a terminal N11, the semiconductor switch circuit 11 turns on the power switch to make electrical conduction between terminals N13 and N14, supplying the load RL with current for its driving. Additionally, the semiconductor switch circuit 11 outputs a current detection signal from a terminal N12. The semiconductor switching circuit 11 may be comprised of, for example, IPS (Intelligent Power Switch) or a combination of MOSFET and a shunt resistor.

The controller 12 includes an input determination control unit 21, a timer control unit 22, a sleep control unit 23, a temperature estimation unit 24, an anomaly determination unit 25, an AND circuit 26, and terminals N1, N2 and N3 for connection with external equipment.

The input determination control unit 21 is connected to an operation switch SW1 through the terminal N1. When inputting an ON command or an OFF command by the operation switch SW1, the input determination control unit 21 outputs a switch input signal based on these commands to the AND circuits 26 and the timer control unit 22.

The timer control unit 22 has a timer for counting time and activates the timer when the switch input signal representing the OFF command is outputted from the input determination control unit 21.

When a determined time is counted by the timer, the sleep control unit 23 is configured to control switching the operation of whole of the controller 12 from a normal mode, which is a mode during normal operation, to a sleep mode (low power-consumption mode) whose power consumption is smaller than that in the normal mode. While, when the input determination control unit 21 inputs the switch input signal representing the ON command, the sleep control unit 23 is configured to control transferring to the normal mode upon canceling the sleep mode. Thus, the sleep control unit 23 serves as a mode switching unit for switching the operation mode of the controller 12.

The temperature estimation unit 24 is connected to the terminal N3. The terminal N3 is connected to the terminal N12 of the semiconductor switch circuit 11 via a resistor. The temperature estimation unit 24 acquires a current detection signal flowing to the semiconductor switch circuit 11, calculates the quantities of heat generation and heat radiation of a power line constituting the electricity supply circuit, based on current flowing to the semiconductor switch circuit 11, and further estimates temperature of the power line constituting the electricity supply circuit, based on the characteristics of the electricity supply circuit, such as thermal resistance and heat capacity. Note, a method of estimating the temperature of the power line by the temperature estimation unit 24 will be described later.

Based on the power line temperature estimated by the temperature estimation unit 24, the anomaly determination unit 25 outputs a disconnection signal to the AND circuit 26 when the power line temperature reaches a preset threshold temperature. Specifically, the anomaly determination unit 25 outputs a signal at "L" level to the AND circuit 26.

One input terminal of the AND circuit 26 is connected to an output terminal of the input determination control unit 21, and the other input terminal of the AND circuit 26 is connected to an output terminal of the anomaly determination unit 25. When both the output signal of the input determination control unit 21 and the output signal of the anomaly determination unit 25 are signals at "H" level together, the AND circuit 26 outputs a signal at the "H" level through the terminal N2. When the output signal of the AND circuit 26 becomes the "H" level, the semiconductor switch circuit 11 is turned on, so that the load RL is supplied with the electricity.

[Description of Estimation Process of Power Line Temperature]

Next, the estimation process of the power line temperature by the temperature estimation unit 24 will be described. First, the calculation of rising temperature is explained. The quantity of heat X1 [J] of power line accompanied with heat generation caused by current flowing to the power line connected to the load RL can be represented by following equation (1).

$$X1 = i^2 \times R_{on} \times \Delta t \qquad \cdots (1)$$

where, i is current [A], $R_{on}$ is resistance of a conductor [Ω], and Δt is a sampling time [sec].

Therefore, the present estimated temperature T1 of the power line [°C] can be obtained by adding temperature, which is obtained by dividing the quantity of heat X1 [J] by heat capacity [J/°C], to temperature [°C] at a previous detection (initially, ambient temperature).

Next, the calculation of lowering temperature will be described. The quantity of heat radiation Y1 [J] accompanied with heat radiation under condition that no current is detected by the semiconductor switch circuit 11 can be represented by following equation (2).

$$Y1 = Q / (C_{th} \times R_{th} / \Delta t) \qquad \cdots (2)$$

where, Q is heat quantity of the power line [J], $C_{th}$ is heat capacity of the power line [J/°C], $R_{th}$ is thermal resistance of the power line [°C/W], and Δt is a sampling time [sec]. Then, the present estimated temperature of the power line T1 [°C] can be obtained by subtracting temperature, which is obtained by dividing the quantity of heat radiation Y1 [J] by the heat capacity [J/°C] from temperature [°C] at a previous detection.

[Explanation about Normal Operation]

Next, the operation of the protector for the electricity supply circuit according to the embodiment at the normal operation will be described. When the operation switch SW is turned on and an ON command signal is inputted to the controller 12 through the terminal N1, the ON command signal is supplied, as a switch input signal representing the ON command, to one input terminal of the AND circuit 26 by the input determination control unit 21. Further, during the normal operation, the anomaly determination unit 25 does not output a temperature anomaly signal but outputs a signal at the "H" level. Thus, an output signal from the AND circuit 26 becomes the "H" level, so that a signal at the "H" level is outputted from the terminal N2. Then, the "H" level signal is supplied to the terminal N11 of the semiconductor switch circuit 11.

Consequently, the semiconductor switch circuit 11 activates the power switch and supplies the load RL with electricity from the power supply VB. As a result, it becomes possible to drive the load RL. The temperature estimation unit 24 calculates the estimated temperature T1 of the power line constituting the electricity supply circuit based on the equations (1) and (2). When the estimated temperature T1 of the power line reaches a predetermined threshold value, then the anomaly determination unit 25 outputs a disconnection signal. That is, the anomaly determination unit 25 switches the output signal from the "H" level to the "L" level. As a result, the output signal of the AND circuit 26 is altered from the "H" level to the "L" level, so that the semiconductor switch circuit 11 inactivates the power switch to stop supplying the electricity to the load RL.

In this way, the controller 12 allows the temperature estimating unit 24 to estimate the estimated temperature T1 of the power line at a predetermined sampling period and also operates to disconnect the semiconductor switch circuit 11 when the estimated temperature T1 of the power line exceeds the threshold value, and thereby to stop supplying the electricity to the load RD, then protecting whole of the circuit.

[Explanation about Transitional Operation to Sleep Mode]

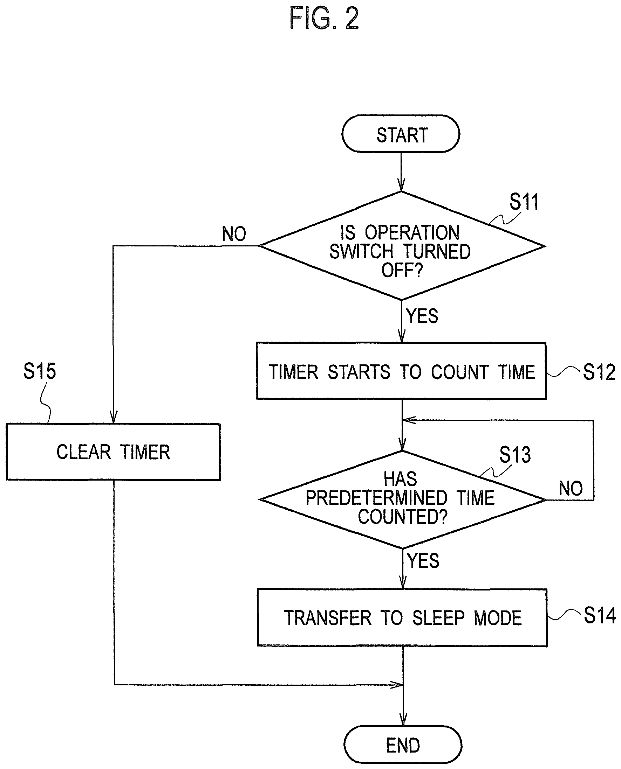

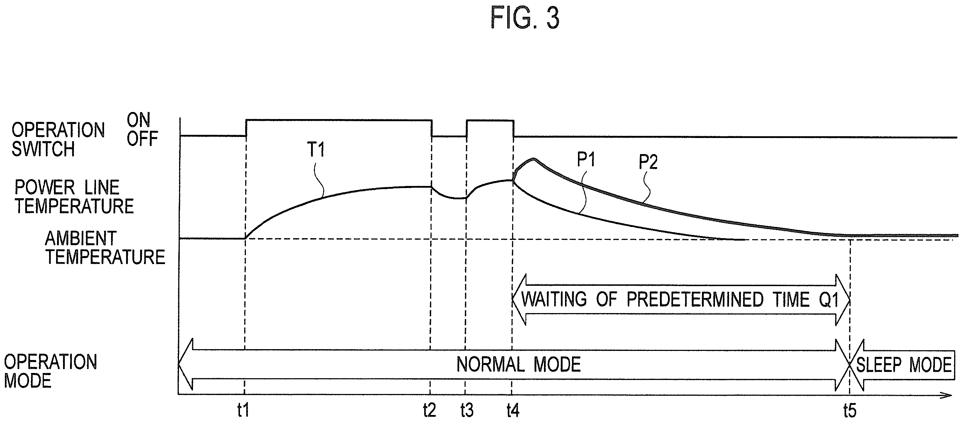

Next, the operation of transferring the controller 12 into the sleep mode after the load RL is turned off will be described with reference to a flow chart illustrated in Fig. 2 and a timing chart illustrated in Fig. 3. This process is executed by the timer control unit 22 and the sleep control unit 23.

First, in step S11, the timer control unit 22 judges whether or not the switch input signal outputted from the input determination control unit 21 is a signal representing the OFF command. That is, it is executed to judge whether or not the OFF command signal is inputted to the terminal N1 since the operation switch SW1 has been turned off.

In step S12, the timer control unit 22 actuates a timer to count the elapsed time since the OFF command signal is inputted.

In step S13, the timer control unit 22 judges whether or not a predetermined time is detected to have counted by the timer. When it is judged that the predetermined time has been counted by the timer (YES in step S13), the routine goes to step S14 where the sleep control unit 23 transfers the operation of whole of the controller 12 into the sleep mode. Consequently, the power consumption of the controller 12 as a whole is reduced. As a result, it is possible to reduce the burden of the battery installed on the vehicle and also possible to prevent the battery from being exhausted.

The timer control unit 22 clears the timer when the switch input signal representing the ON command is supplied from the input determination control unit 21. That is, if the input operation for turning on the load RL is performed (NO in step S11), the routine goes to step S15 where the normal mode is maintained by clearing the timer, without transferring into the sleep mode:

Next, the operation of the timer and the change in power line temperature after the operation switch SW1 is turned off will be described with reference to the timing chart illustrated in Fig. 3.

First, when the operation switch SW1 is turned on at time t1 of Fig. 3, the switch input signal representing the ON command is inputted to the controller 12. Thus, the semiconductor switch circuit 11 is turned on, so that current flows to the power line of the electricity supply circuit, causing the driving of the load RL to be started. Then, the power line temperature starts to rise from ambient temperature (e.g. 25 °C) gradually.

Then, upon turning off the operation switch SW1 at time t2, the timer control unit 22 activates the timer to count the elapsed time since the operation switch was turned off.

Subsequently, when the operation switch SW1 is turned on at time t3 prior to the timer's counting of the prescribed time, the timer is reset and the current flows to the load RL. The result is that the estimated temperature T1 of power line is shifted from its lowering to rising at time t3, as illustrated in Fig. 3. Additionally, as illustrated in Fig. 3, the estimating process of power line temperature is maintained. Thereafter, when an ignition of the vehicle is turned off at time t4 and correspondingly, the operation switch is turned off, and the timer starts to count time. At this time, the estimated temperature T1 of the power line estimated with use of the above-mentioned equation (2) starts to lower from time t4 gradually, as illustrated with a curve P1. That is, the estimated temperature T1 of the power line estimated by the temperature estimation unit 24 changes as illustrated with the curve P1.

In fact, however, as the forced air cooling is stopped with such an inactivation of the ignition, there is a possibility that high-temperature air is accumulated in an engine room. The result is that the power line is heated due to this high-temperature air and the power line temperature rises when turning off the semiconductor switch circuit 11, for example, as illustrated with a curve P2. For this reason, the actual power line temperature gets higher than the temperature estimated by the temperature estimation unit 24 (i.e. temperature illustrated with P1), and even if the estimated temperature (P1) drops to the ambient temperature, the actual temperature (P2) remains temperature higher than the ambient temperature. At this time, if the operation is transferred to the sleep mode on the ground of the judgment that the estimated temperature (P1) reaches the ambient temperature, the controller 12 would be transferred to the sleep mode despite that the power line temperature remains higher and therefore, it would be impossible to control the semiconductor switch circuit 11 properly.

According to the embodiment, when the predetermined time (time Q1 illustrated in Fig. 3) has passed after the operation switch SW1 is turned off, the operation of the controller 12 is transferred into the sleep mode. Therefore, by establishing this time Q1 so as to be enough time that is necessary for the power line temperature to reach the ambient temperature, it becomes possible to transfer the operation to the sleep mode after the power line temperature was lowered to the ambient temperature, even if the power line temperature rises by environmental heat sources.

In this way, in the protector for the electricity supply circuit according to the embodiment, the operation of the controller 12 is transferred from the normal mode to the sleep mode after the predetermined time (Q1) has passed since the load RL, such as lamp and motor, installed on a vehicle is turned off. Therefore, even when there is caused an error in the estimated temperature of the power line estimated by the temperature estimation unit 24, it is possible to control ON/OFF states of the semiconductor switch circuit 11 appropriately since the controller 12 is transferred into the sleep mode under condition that the power line temperature is lowered certainly (for example, condition where the power line temperature is lowered to the ambient temperature).

Although the protector for the electricity supply circuit according to the embodiment of the present invention has been described with reference to the accompanying drawings hereinbefore, the present invention is not limited to this embodiment only and therefore, the constitution of each part may be replaced with any given constitution.

**Industrial Applicability**

The present invention is available for transferring the operation of the controller of a load installed on a vehicle into the sleep mode properly.

**Claims**

1. A protector for an electricity supply circuit, wherein the protector is installed on a vehicle to monitor a temperature of the electricity supply circuit connected to a load (RL) and, wherein the protector is able to disconnect the electricity supply circuit when an estimated temperature of the electricity supply circuit exceeds a preset threshold so to protect the electricity supply circuit, the protector comprising:

   a power switch (11) capable to switch between connection and disconnection of the electricity supply circuit;
   a controller (12) configured to output a switching command signal to the power switch in accordance with an input signal; and
   a current detector (11) for detecting current flowing to the electricity supply circuit, wherein the controller (12) **characterized by**:

   a temperature estimation unit (24) configured to calculate rising temperature of the electricity supply circuit based on a current detected by the current detector and conducting time since when the electricity supply circuit is turned on, calculate lowering temperature of the electricity supply circuit based on elapsed time since when the electricity supply circuit is turned off by the controller, and calculate temperature of the electricity supply circuit based on the rising temperature and the lowering temperature;
   a timer (22) for counting elapsed time that passes after the load has been turned off when the load is turned off by the power switch; and
   a mode switching unit (23) configured to switch the controller to a low power consumption mode, where the power consumption is smaller than that in a normal operation mode, when a predetermined time (Q1) is counted by the timer.

2. The protector for the electricity supply circuit according to claim 1, wherein the temperature estimation unit (24) does not calculate the temperature of the electricity supply circuit when the operation is switched to the low power consumption mode by the mode switching unit (23).

**Patentansprüche**

1. Schutzvorrichtung für eine Stromversorgungsschaltung, wobei die Schutzvorrichtung in einem Fahrzeug eingebaut ist, um eine Temperatur der Stromversorgungsschaltung, die an eine Last (RL) angeschlossen ist, zu überwachen und wobei die Schutzvorrichtung geeignet ist, die Stromversorgungsschaltung abzuschalten, wenn eine geschätzte Temperatur der Stromversorgungsschaltung einen vorgegebenen Schwellenwert überschreitet, um die Stromversorgungsschaltung zu schützen, wobei die Schutzvorrichtung umfasst:

   einen Leistungsschalter (11), der imstande ist, zwischen Anschließen und Abschalten der Stromversorgungsschaltung umzuschalten;
   eine Steuerung (12), die konfiguriert ist, um ein Schaltbefehlssignal an den Leistungsschalter in Übereinstimmung mit einem Eingangssignal auszugeben; und
   einen Stromflussdetektor (11) zum Detektieren eines Stromflusses, der zur Stromversorgungsschaltung fließt, wobei die Steuerung (12) **dadurch gekennzeichnet ist, dass**:

   eine Temperaturschätzungseinheit (24) konfiguriert ist, um eine steigende Temperatur der Stromversorgungsschaltung basierend auf einem Stromfluss, der durch den Stromflussdetektor detektiert wird, und einer stromführenden Zeit, seit der Anschaltung der Stromversorgungsschaltung, zu berechnen, eine sinkende Temperatur der Stromversorgungsschaltung basierend auf einer verstrichenen Zeit, seit der Ausschaltung der Stromversorgungsschaltung durch die Steuerung, zu berechnen, und eine Temperatur der Stromversorgungsschaltung basierend auf der steigenden Temperatur und der sinkenden Temperatur zu berechnen;

einen Zeitgeber (22) zum Zählen einer verstrichenen Zeit, die nach der Ausschaltung der Last vergeht, wenn die Last durch den Leistungsschalter ausgeschaltet wird; und eine Modusschalteinheit (23), die konfiguriert ist, um die Steuerung auf einen Niedrigleistungsverbrauchsmodus umzuschalten, in dem der Leistungsverbrauch geringer ist als der in einem Normalbetriebsmodus, wenn eine vorbestimmte Zeit (Q1) vom Zeitmesser gezählt wird.

**2.** Schutzvorrichtung für die Stromversorgungsschaltung nach Anspruch 1, wobei
die Temperaturschätzungseinheit (24) die Temperatur der Stromversorgungsschaltung nicht berechnet, wenn der Betrieb auf den Niedrigleistungsverbrauchsmodus durch die Modusschalteinheit (23) umgeschaltet wird.

## Revendications

**1.** Dispositif de protection d'un circuit d'alimentation en électricité, dans lequel le dispositif de protection est monté sur un véhicule pour surveiller une température du circuit d'alimentation en électricité connecté à une charge (RL) et dans lequel le dispositif de protection est capable de déconnecter le circuit d'alimentation en électricité lorsqu'une température estimée du circuit d'alimentation en électricité dépasse un seuil prédéfini afin de protéger le circuit d'alimentation en électricité, le dispositif de protection comprenant :

un interrupteur d'alimentation (11) capable de commuter entre la connexion et la déconnexion du circuit d'alimentation en électricité ;
un dispositif de commande (12) configuré pour transmettre un signal de commande de commutation à l'interrupteur d'alimentation en fonction d'un signal d'entrée ; et
un détecteur de courant (11) pour détecter un courant s'écoulant vers le circuit d'alimentation en électricité, dans lequel
le dispositif de commande (12) est **caractérisé par** :

une unité d'estimation de température (24) configurée pour calculer une température croissante du circuit d'alimentation en électricité sur la base d'un courant détecté par le détecteur de courant et d'un temps de conduite depuis que le circuit d'alimentation en électricité a été mis sous tension, calculer une température décroissante du circuit d'alimentation en électricité sur la base d'un temps écoulé depuis que le circuit d'alimentation en électricité a été mis hors tension par le dispositif de commande, et calculer une température du circuit d'alimentation en électricité sur la base de la température croissante et de la température décroissante ;
une minuterie (22) pour décompter un temps qui s'est écoulé après que la charge a été mise hors tension lorsque la charge est mise hors tension par l'interrupteur d'alimentation ; et
une unité de commutation de mode (23) configurée pour basculer le dispositif de commande sur un mode de basse consommation électrique, où la consommation électrique est inférieure à celle d'un mode de fonctionnement normal, lorsqu'un délai prédéterminé (Q1) est décompté par la minuterie.

**2.** Dispositif de protection du circuit d'alimentation en électricité selon la revendication 1, dans lequel l'unité d'estimation de la température (24) ne calcule pas la température du circuit d'alimentation en électricité lorsque le fonctionnement est basculé sur le mode de basse consommation électrique par l'unité de commutation de mode (23).

FIG. 1

100

EP 2 843 792 B1

# FIG. 2

# FIG. 3

EP 2 843 792 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012022708 A1
- WO 2011132732 A1
- JP 2010239835 A